# EUROPÄISCHE PATENTANMELDUNG

(11) **EP 2 187 083 A1**
(43) Veröffentlichungstag der Anmeldung: **19.05.2010**
(21) Anmeldenummer: 09013074.1
(22) Anmeldetag: 16.10.2009
(51) Int. Cl.: F16F 1/02, F16F 1/32

(54) **Tellerfeder**

(30) Priorität: 18.11.2008 DE 102008058089
(71) Anmelder: Carl Freudenberg KG, 69469 Weinheim (DE)
(72) Erfinder: Boggasch, Mark, 69515 Laudenbach (DE); van der Meulen, Frank, 88074 Meckenbeuren (DE); Barthel, Lothar, 88074 Meckenbeuren (DE); Pflästerer, Jens, 69509 Mörlenbach (DE)

(57) **Zusammenfassung**

Tellerfeder (1), umfassend einen hohlkegelig ausgebildeten Federkörper (2) der durch zwei einander gegenüber liegende Flächen (3, 4) begrenzt ist, wobei der Federkörper (2) mit einer Beschichtung (5) aus einem elastomerem Material versehen ist.

## Beschreibung

### Technisches Gebiet

Die Erfindung betrifft eine Tellerfeder, umfassend einen hohlkegelig ausgebildeten Federkörper der durch zwei einander gegenüber liegende Flächen begrenzt ist.

### Stand der Technik

Tellerfedern sind kegelige Ringschalen, die in axialer Richtung belastet werden. Sie sind **dadurch gekennzeichnet, dass** sie bei geringem Bauraumbedarf hohe Kräfte aufnehmen können. Dabei weisen sie einen vergleichsweise geringen Federweg auf. In Getrieben werden Tellerfedern zum Verspannen von Zahnrädern mit Wellen eingesetzt. In Automatikgetrieben werden ebenfalls Tellerfedern eingesetzt, um die Zahnräder mit Wellen zu verspannen. Automatikgetriebe sind auch **dadurch gekennzeichnet, dass** verschiedene Räume vorhanden sind, die mit unterschiedlichen Fluiden befüllt sind, wobei an den Übergängen zwischen den Räumen Dichtungen angeordnet sind, die verhindern, dass sich die unterschiedlichen Fluide durchmischen.

### Darstellung der Erfindung

Der Erfindung liegt die Aufgabe zugrunde, die Tellerfeder so auszugestalten, dass die erforderliche Dichtfunktion durch die Tellerfeder übernommen werden kann.

Zur Lösung der Aufgabe ist der Federkörper mit einer Beschichtung aus einem elastomerem Material versehen. Dadurch kann erfindungsgemäß eine Dichtfunktion in die Tellerfeder integriert werden. Somit werden mehrere Funktionen, nämlich Federfunktion und Dichtfunktion in ein einziges kompaktes Bauteil integriert und es wird Bauraum gespart. Die Beschichtung ist vorzugsweise stoffschlüssig, beispielsweise durch Spritzgießen mit dem Federkörper verbunden und bildet einen festen Verband mit dem Federkörper. Dabei kann die Beschichtung den Federkörper auch vollständig umgeben und den Federkörper so vor chemisch aggressiven Medien zu schützen. Unter Federkörper im Sinne der Erfindung sind auch solche Federkörper zu verstehen, die am Innen- und/oder Außenumfang mit Konturierungen, beispielsweise Vorsprüngen oder Nasen versehen sind. Derartige Konturierungen beeinflussen die Federungseigenschaften des Federkörpers.

Aus der Beschichtung kann wenigstens eine umlaufende Dichtlippe ausgebildet sein. Die Dichtlippe legt sich an ein angrenzendes Bauelement an und dichtet den Spalt zwischen Federkörper, der eigentlichen Tellerfeder, und angrenzendem Bauelement ab. Dabei kann die Dichtlippe axial auf einer der beiden Flächen oder radial nach innen und außen abragen.

Der Federkörper kann ein zentrisch angeordnetes Loch aufweisen und aus der Beschichtung kann eine erste Dichtlippe ausgebildet sein, die in das Loch hineinragt. Nach der Montage ragt durch das Loch üblicherweise die Welle hindurch auf der durch die Tellerfeder ein Maschinenelement, beispielsweise ein Zahnrad, fixiert werden soll. Durch die Beschichtung, die axial nach innen weist, findet ein dichtender Kontakt zwischen Tellerfeder und Welle statt, so dass kein abzudichtendes Fluid durchdringen kann. Der Kontakt zwischen Welle und Tellerfeder ist dabei nahezu statisch, das heißt es erfolgt keine Relativbewegung der beiden Bauelemente.

Aus der Beschichtung kann eine zweite Dichtlippe ausgebildet sein, die einer Fläche zugeordnet ist und in Richtung der Mittelachse der Tellerfeder weist. Diese zweite Dichtlippe legt sich dabei entweder an die Welle, an das auf der Welle fixierte Maschinenelement oder einem zwischengeschalteten Maschinenelement in axialer Richtung an. Ein derartiges zwischengeschaltetes Maschinenelement kann eine Zentrierscheibe sein. Grundsätzlich ist es vorteilhaft wenn die Dichtlippe nach der Montage in Richtung des betriebsbedingt höheren Druckes weist. So kann es vorteilhaft sein, die Dichtlippe radial nach außen abragend zu gestalten.

Die zweite Dichtlippe kann in Richtung der Mittelachse abgebogen sein. Bei dieser Ausgestaltung ergibt sich durch den bogenförmigen Verlauf mit freiem Ende eine federnde Befestigung der zweiten Dichtlippe, was besonders vorteilhaft ist, da die Federwirkung einer Tellerfeder durch axiale Bewegung zustande kommt und die zweite Dichtlippe, um die Dichtwirkung aufrecht zu erhalten, die axiale Bewegung ausgleichen und dabei stets an angrenzenden Bauteil anliegen sollte. Wie zuvor beschrieben, kann es vorteilhaft sein, die zweite Dichtlippe auch radial nach abgebogen zu gestalten.

Aus der Beschichtung kann eine dritte Dichtlippe ausgebildet sein, die einer Fläche zugeordnet ist und radial nach außen weist. Diese dritte Dichtlippe kann an dem zu fixierenden Maschinenelement, dem Zahnrad anliegen und hier den Spalt zwischen Federkörper und Bohrung des Zahnrades abdichten. Bei einer erfindungsgemäßen Ausgestaltung mit einer ersten, einer zweiten und einer dritten Dichtlippe erfolgt eine vollständige Abdichtung der Verbindungsstelle zwischen der Welle und dem Zahnrad. Die Trennung verschiedener Medien ist somit gewährleistet.

Der Bereich der größten radialen Erstreckung der Tellerfeder kann der dritten Dichtlippe zugeordnet sein. Dadurch ist gewährleistet, dass stets das flexible elastomere Dichtungsmaterial an dem Maschinenelement, beispielsweise dem Zahnrad, anliegt.

Der Federkörper kann aus einem metallischen Werkstoff bestehen. Typische Werkstoffe für Tellerfedern sind bekannte Federstähle. Tellerfedern in der für Getriebeanwendungen typischen Größenordnung werden dabei meist gestanzt. Somit ist der Federkörper kostengünstig herstellbar.

Die Beschichtung kann aus einem spritzgießfähigen Elastomer bestehen. Derartige Elastomere sind besonders einfach zu verarbeiten und die Herstellung einer beschichteten Tellerfeder ist besonders einfach. Insbesondere bei Getriebeanwendungen, bei denen hochadditive Schmiermittel zum Einsatz gelangen, ist es aber auch denkbar, einen für diesen Einsatz besonders beständigen elastomeren Kunststoff wie Acrylkautschuk (ACM) einzusetzen.

In einer erfindungsgemäßen Verwendung Erfindung gelangt die zuvor beschriebene Tellerfeder in einem Getriebe zum Einsatz. Dabei ist die Tellerfeder auf einer Welle angeordnet, wobei die Tellerfeder ein auf der Welle angeordnetes Zahnrad mit der Welle verspannt. Dabei wird die Tellerfeder auf einem Wellenfortsatz angeordnet und mittels einer Schraube gegen die Flanke des Zahnrades gepresst. Die Anpressung kann auch indirekt erfolgen, wenn zwischen Tellerfeder und Zahnrad noch eine Zentrierscheibe zwischengeschaltet ist. Aufgrund der Beschichtung dichtet die Tellerfeder darüber hinaus den Spalt zwischen Welle und Zahnrad sowie gegebenenfalls auch der Zentrierscheibe ab. Insbesondere bei Ausbildung des Getriebes als Automatikgetriebe dichtet die Tellerfeder zwei Räume, die mit unterschiedlichen Schmiermitteln befüllt sind, gegeneinander ab.

### Kurzbeschreibung der Zeichnung

Einige Ausführungsbeispiele der erfindungsgemäßen Tellerfeder werden nachfolgend anhand der Figuren näher erläutert. Diese zeigen, jeweils schematisch:
Fig. 1 die Tellerfeder im Schnitt;
Fig. 2 eine Getriebeanordnung.

### Ausführung der Erfindung

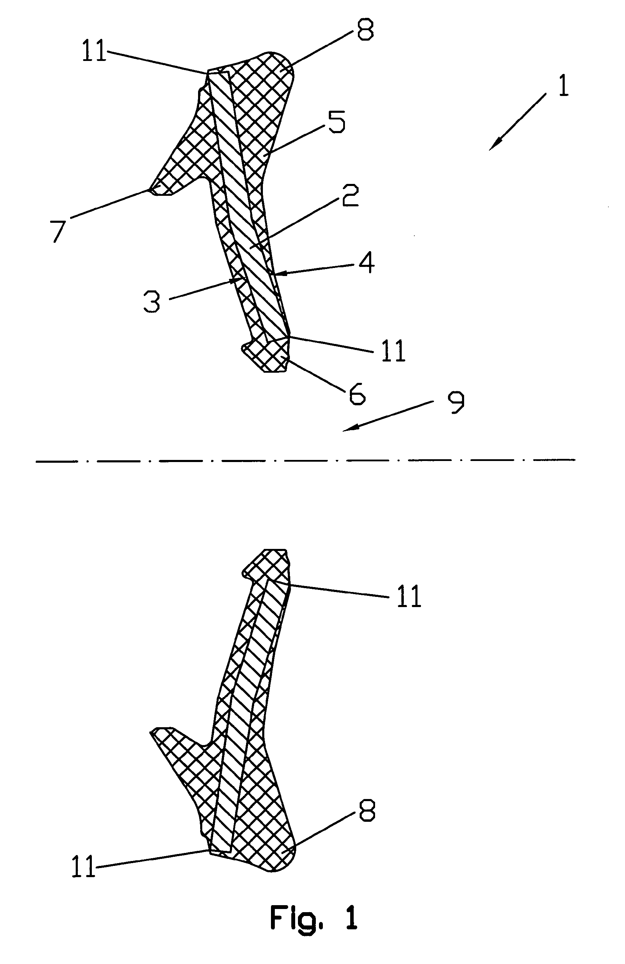

Figur 1 zeigt eine Tellerfeder 1, bestehend aus einem hohlkegelig ausgebildeten Federkörper 2 aus metallischem Werkstoff, der durch zwei einander gegenüber liegende Flächen 3, 4 begrenzt ist und ein zentrisch angeordnetes Loch 9 aufweist. Der Federkörper 2 ist mit einer Beschichtung 5 aus einem elastomerem Material, hier ACM, versehen, der den Federkörper 2 nahezu vollständig umgibt. Lediglich an den Stellen, die die axialen Anlagekanten 11 bilden, ragt der Federkörper 2 linienförmig hervor. Aus der Beschichtung 5 sind insgesamt drei umlaufende Dichtlippe 6, 7, 8 ausgebildet. Eine erste Dichtlippe 6 ragt radial in das Loch 9 hinein. Eine zweite Dichtlippe 7 ist der Fläche 3 zugeordnet und weist in Richtung der Mittelachse der Tellerfeder 1, wobei die zweite Dichtlippe 7 in Richtung der Mittelachse abgebogen ist. Eine dritte Dichtlippe 8 ist der Fläche 4 zugeordnet und weist radial nach außen, wobei der Bereich der größten radialen Erstreckung der Tellerfeder 1 der dritten Dichtlippe 8 zugeordnet ist.

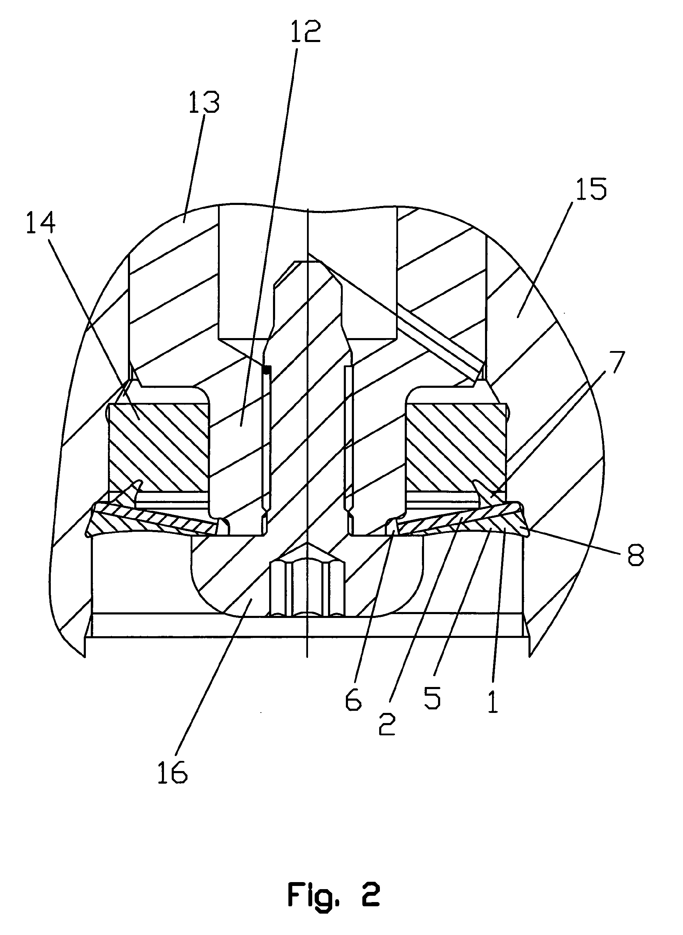

Figur 2 zeigt die in Figur 1 beschriebene Tellerfeder montiert in einem Getriebe 10, hier einem Automatikgetriebe. Die Tellerfeder 1 ist auf den Wellenstumpf 12 einer Antriebswelle 13 aufgeschoben und liegt axial an einer Zentrierscheibe 14 an, die wiederum axial an einem Antriebsrad 15 anliegt. Auf der der Zentrierscheibe 14 gegenüber liegenden Seite wird die Tellerfeder 1 durch eine Schraube 16, die in der Antriebswelle 13 befestigt ist, an die Zentrierscheibe 14 und indirekt an das Antriebsrad 15 angepresst und verspannt so das Antriebsrad 15 mit der Antriebswelle 13. Durch die aus der Beschichtung 5 ausgebildeten Dichtlippen 6, 7, 8 liegt die Tellerfeder dabei dichtend an der Antriebswelle 13, der Zentrierscheibe 14 und dem Antriebsrad 15 an und dichtet so die angrenzenden Räume gegeneinander ab und verhindert den Übertritt von Schmiermittel.

## Patentansprüche

1. Tellerfeder (1), umfassend einen hohlkegelig ausgebildeten Federkörper (2) der durch zwei einander gegenüber liegende Flächen (3, 4) begrenzt ist, **dadurch gekennzeichnet, dass** der Federkörper (2) mit einer Beschichtung (5) aus einem elastomerem Material versehen ist.

2. Tellerfeder nach Anspruch 1, **dadurch gekennzeichnet, dass** aus der Beschichtung (5) wenigstens eine umlaufende Dichtlippe (6, 7, 8) ausgebildet ist.

3. Tellerfeder nach Anspruch 1 oder 2, **dadurch gekennzeichnet, dass** der Federkörper (2) ein zentrisch angeordnetes Loch (9) aufweist und dass aus der Beschichtung (5) eine erste Dichtlippe (6) ausgebildet ist die in das Loch (9) hineinragt.

4. Tellerfeder nach einem der Ansprüche 1 bis 3, **dadurch gekennzeichnet, dass** aus der Beschichtung (5) eine zweite Dichtlippe (7) ausgebildet ist, die einer Fläche (3, 4) zugeordnet ist und in Richtung der Mittelachse der Tellerfeder (1) weist.

5. Tellerfeder nach Anspruch 4, **dadurch gekennzeichnet, dass** die zweite Dichtlippe (7) in Richtung der Mittelachse abgebogen ist.

6. Tellerfeder nach einem der Ansprüche 1 bis 5, **dadurch gekennzeichnet, dass** aus der Beschichtung (5) eine dritte Dichtlippe (8) ausgebildet ist, die einer Fläche (3, 4) zugeordnet ist und radial nach außen weist.

7. Tellerfeder nach Anspruch 6, **dadurch gekennzeichnet, dass** der Bereich der größten radialen Erstreckung der Tellerfeder (1) der dritten Dichtlippe (8) zugeordnet ist.

8. Tellerfeder nach einem der Ansprüche 1 bis 7, **dadurch gekennzeichnet, dass** der Federkörper (2) aus einem metallischen Werkstoff besteht.

9. Tellerfeder nach einem der Ansprüche 1 bis 8, **dadurch gekennzeichnet, dass** die Beschichtung (5) aus einem spritzgießfähigen Elastomer besteht.

10. Verwendung der Tellerfeder (1) nach einem der vorherigen Ansprüche in einem Getriebe (10).

11. Verwendung nach Anspruch 10, **dadurch gekennzeichnet, dass** das Getriebe (10) als Automatikgetriebe ausgebildet ist.
